# EUROPEAN PATENT SPECIFICATION

(11) **EP 0 153 752 B1**
(45) Date of publication and mention of the grant of the patent: **02.06.1993**
(21) Application number: 85102254.1
(22) Date of filing: 28.02.1985
(51) Int. Cl.: G06F 11/10

(54) **Semiconductor memory device with a bit error detecting function**
Halbleiterspeichergerät mit einer Bit-Fehlererkennungsfunktion
Dispositif de mémoire à semi-conducteur comprenant une fonction de détection de bit d'erreur

(30) Priority: 01.03.1984 JP 39507/84
(43) Date of publication of application: 04.09.1985
(73) Proprietor: KABUSHIKI KAISHA TOSHIBA, Kawasaki-shi, Kanagawa-ken 210 (JP)
(72) Inventor: Tsujimoto, Jun-ichi c/o Patent Division, Minato-ku Tokyo 105 (JP)
(74) Representative: Henkel, Feiler, Hänzel & Partner

(56) References cited:
- WO-A-82/02266
- US-A- 4 317 201
- US-A- 4 412 314
- COMPUTER, vol. 14, no. 10, October 1981, Tutorial Series 13, pages 93-110, IEEE, New York, US; A.V. POHM et al.: "Computer memory systems"
- IEEE JOURNAL OF SOLID-STATE CIRCUITS, vol. SC-18, no. 5, October 1983, pages 463-470, IEEE, New York, US; T. MANO et al.: "Circuit techniques for a VLSI memory"
- PATENT ABSTRACTS OF JAPAN, vol. 6, no. 152 (P-134)[1030], 12th August 1982; & JP-A-57 71 596 (FUJITSU K.K.) 04-05-1982

## Description

This invention relates to a semiconductor memory device with a bit error detecting function for detecting a bit error correction.

In recent microfabricated semiconductor memory devices, the constitutional elements have been remarkably reduced in size, and their package density has been increased. Further, the amount of charge stored as data is minimal. The data stored therein is sensitive to external rays such as α rays, accordingly. As a result, this creates a serious soft error problem. Thus, the bit error due to α rays, for example, is easy to occur in the high package density memory device. If the bit error occurs, it is, of course, necessary to detect and correct it.

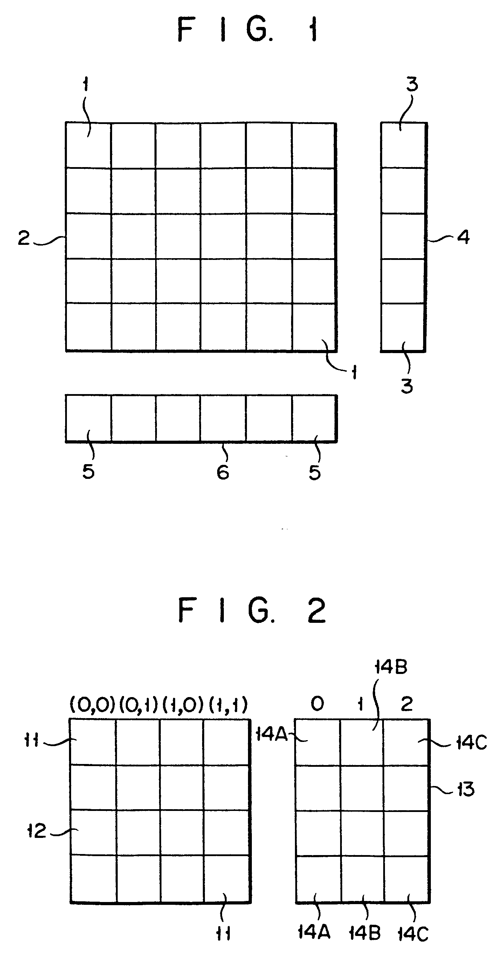

A typical conventional detecting and correcting system of one bit error will be given in brief, referring to Fig. 1. In the figure, a plurality of memory cells 1, each for storing one bit, are arrayed in a vertical (X) direction and a horizontal (Y) direction into a matrix memory cell array 2. In addition to the memory cell array 2, a first parity memory circuit 4 is provided, which consists of a plurality of parity storage cells 3 for storing parity bits for the horizontally arrayed memory cells of the memory cell array 2. A second parity memory circuit 6 is further provided, which consists of a plurality of parity storage cells 5 for storing parity bits for the vertically arrayed memory cells of the memory cell array 2.

With such an arrangement, for storing data into the memory cells 1 of the memory cell array 2, parity bits are successively obtained for the data of all of the memory cells 1 of the memory cell array 2, row by row. The parity bits obtained are respectively stored into the corresponding parity storage cells 3 of the first parity memory circuit 4. Similarly, the parity bits of all of the data in the memory cells 1 arrayed of the memory cell array 2 are obtained column by column. The parity bits obtained are respectively stored into the corresponding parity storage cells 5 of the second parity memory circuit 6.

For reading out data from the memory cells 1 of the memory cell array 2, the parity bits in the corresponding parity storage cells 3 of the first parity memory circuit 4 are read out. The parity bit preset in the parity storage cell 5 in the second parity memory circuit 6 is read out. Then, the data read out from the memory cell 1 is parity-checked using the parity bits readout. Namely, it is checked as to whether or not an error is contained in the readout data. When a data error is detected, it is decided that the bit error occurs, and the data readout of the memory cells 1 is level-inverted and corrected.

An another known method for detecting and correcting the bit error up to two bits, an address computer is used.

The memory device shown in Fig. 1 can correct the bit error of only one bit. Further, it requires data-readout bit lines for receiving data read out from the memory cells 1; one for vertical and the other for horizontal. Thus, the additional bit line for the vertical must be provided in a design of a general type of semiconductor memory device in which word lines are provided in one (vertical) direction, and bit lines in the other (horizontal) direction. This conventional memory device makes the manufacturing process more complicated.

In the case of the bit error detecting/correcting method using the address computer, when it is applied to the semiconductor memory device, a design of the memory device to be employed is quite different from that of the conventional one which causes great difficulty. Further, it is necessary to compute the addresses in the semiconductor memory chip, resulting in a long period of time.

A semiconductor memory device as specified in the precharacterizing part of claim 1 is known from prior art document COMPUTER, vol. 14, number 10, Oct. 1981, Tutorial Series 13, pages 93 to 110, IEEE New York, US; A.V. PHOM et al.: "Computer memory systems". In this document, however, nothing is disclosed on what basis of relation parity bit operations are actually performed, and numerous ways for parity computation are only valuely mentioned.

One of such ways is described in prior art document US-A-4 317 201, which discloses an error detecting and correcting RAM assembly including a parity generator and a parity comparator to determine the presence of an error. The parity generator responds to input data bits in accordance with a specific relationship to produce several check bits. These check bits are loaded in a check bit storage portion of a RAM so that data bits and corresponding check bits are stored in appropriate address locations in this RAM. In other words, the assembly known from document US-A-4 317 201 uses a plurality of check bits for storing parity bits based on various combinations of the data bits. However, in this RAM assembly it is impossible to access all of a plurality of data bits at one time, since a plurality of data bits used for generating the parity bits are randomly combined. Then, it is necessary to access the data bits in several times so that this known check bit generating method is unsuitable to be adapted to the structure of a general semiconductor memory.

Further, prior art document IEEE JOURNAL OF SOLID-STATE CIRCUITS, vol.SC-18, number 5, Oct. 1983, pages 463 to 470, IEEE, New York, US; T. MANO et al.: "Circuit technigues for a VLSI memory", discloses a logic diagramm of a ECC RAM using a bidirectional parity checking. In this logic diagramm, in addition to (k x m) fundamental memory cells, (k + m) parity cells are connected with each word-line. For error detection, two kinds of parity checking are carried out using m bit V-group data, k bit H-group data and 2-bit parity cell data, and final correction is decided by comparing the parity checking results with selected memory cell data. If, for example, a logic diagramm comprises (4 x 4) fundamental memory cells in this logic diagramm, (4 + 4) parity cells are to be connected with each word-line.

Finally, prior art document PATENT ABSTRACT OF JAPAN, vol. 6, number 152 (P-134)[1030], 12th August 1982; & JP-A-57 071 596 (FUJITSU K.K.), 4th May 1982, discloses a monolithic memory chip provided with correction function. This memory chip uses the same parity generating circuit for generating parity in both the read and write mode of a memory.

It is an object of the present invention to provide a semiconductor memory device with a bit error detecting function which requires a design slightly different from that of the conventional semiconductor memory device with no further complications in process manufacturing and having an easy structure.

To solve this object the present invention provides a semiconductor memory device as specified in claim 1.

In the semiconductor memory device according to the present invention a parity memory circuit includes a plurality of first parity storage cells and a plurality of second parity storage cells. The first parity storage cells store parity bits which are provided for the data stored in predetermined memory cells of the memory cell array in the X or Y direction wherein the predetermined memory cells are specified such that predetermined bits of a plurality of addresses' bits of the predetermined memory cells are at the same logical level. Further, the second parity storage cells store parity bits for all of the data stored in the plurality of memory cells on each linear memory cell array in either the X or Y direction.

The semiconductor memory device of the present invention as described above can store parity bits based on memory data of memory cells whose addresses are at the same logical level, among memory cells on each linear memory cell array, which are arranged in either X or Y direction, with respect to a plurality of first parity storage cells. For example, in a case where the memory cells in the X direction of the memory cell array are selected by a two-bit address constituted of X1 and X2, two first parity storage cells are provided on each linear memory cell array in the X direction. One of the first parity storage cells stores parity bits based on the data stored in the two memory cells whose addresses X1 are at the logical "1" level. The other one stores parity bits based on the data stored in the two memory cells whose addresses X2 are at the logical "1" level.

Therefore, memory cells in a case where parity bits to be stored in the above two first parity storage cells are generated, are accessible by using addresses X1 and X2. Such an access method can be adapted to the structure of a general semiconductor memory.

This invention can be more fully understood from the following detailed description when taken in conjunction with the accompanying drawings, in which:
Fig. 1 is a block diagram showing an arrangement of a conventional semiconductor memory device;
Fig. 2 is a block diagram showing an arrangement of a semiconductor memory device which is an embodiment of the present invention;
Fig. 3 is a block diagram of an arrangement of a semiconductor memory device which is another embodiment of the present invention;
Fig. 4 is a block diagram useful in explaining the operation of the Fig. 3 device; and
Fig. 5 is a circuit diagram illustrating the details of the Fig. 2 device.

Reference is made to Fig. 2 illustrating in block form an arrangement of a device capable of detecting and correcting one bit error into which the present invention is applied.

In Fig. 2, reference numeral 11 designates memory cells to and from which one bit data can be written and read out. These memory cells 11 are matrixed into a 4 x 4 memory cell array 12 with a memory capacity of 16 bits. The memory cells 11 in the memory cell array 12 are each addressed by a horizontal address X and a vertical address Y. Usually, an address of the memory device is expressed by a binary number. For example, the horizontal and vertical addresses X and Y are respectively expressed by combinations of logics of m and n bits, such as (x1, x2, ..., xm) and (y1, y2, ..., yn). In this embodiment, four bits are contained in each row and each column of the memory cell array. Then, m = n = 2. The combination of logics of the horizontal address X = (x1, x2) are as shown in Fig. 2: the address (x1, x2) of the memory cells 11 on the leftmost side is (0, 0), and that on the rightmost side is (1, 1).

This embodiment is further provided with a parity memory circuit 13. The parity memory circuit 13 includes four sets of parity storage cells 14A, 14B and 14C at the 0th to 2nd bits arrayed in a row in the memory cell array 12. The number of the parity storage cell sets correspond to the number of the memory cells 11 arrayed in a row in the memory cell array 12. In this embodiment, it is four, as just mentioned.

Of the three cells of each parity storage cell set, the parity storage cell 14A at the 0th bit store a parity bit for the data stored in the four memory cells 11 in the corresponding row in the memory cell array 12. Each of the parity storage cells 14B at the 1st bit stores a parity bit for the data stored in the two cells of the four memory cells 11 arrayed in the corresponding row in the memory cell array 12. In this case, a logical state of the x2 of the address X of that data of each of the two cells is "1". Each of the parity storage cells 14C at the 2nd bit stores a parity bit for the data stored in the two of the four memory cells 11 in the corresponding row in the memory cell array 12. In this case, the logical state of the x1 of the address X of that data of each of the two cells is "1".

In reading out data from a memory cell 11 in the memory cell array 12 by addressing it, a parity generating circuit (not shown) produces the above three parity bits in association with the cell data in the cells on the same column, the cells containing that cell 11 of which the data is to be read out. At the same time, the readout are three parity bits preset in a set of the parity storage cells 14A - 14C in the parity memory circuit 13, which the parity bits are for the data of the four memory cells 11 arrayed in a row, which includes the memory cell 11 of which the data is to be read out. Then, the generated three parity bits are respectively compared with read out ones. By comparison, it is checked whether or not both the parities are coincident with each other, bit by bit.

It is assumed that the input address X = (x1, x2) for the data readout is (0, 0), and that a bit error occurs in the data readout of the memory cell 11 as specified by this address. In this case, of the three parity bits newly generated at the time of reading out data, the 0th bit is not coincident with the 0th bit of the parity bits read out of the parity memory circuit 13.

Further, it is assumed that the input address x = (x1, x2) is (0, 1), and a bit error occurs in the data readout of the memory cells 11. At this time, of the three parity bits newly generated at the time of reading out data, the 0th bit and the 1st bit are not coincident with the corresponding ones of the parity bits read out of the parity memory circuit 13, respectively.

It is further assumed that the input address x = (x1, x2) is (1, 0), and that a bit error occurs in the data readout of the memory cells 11 as specified by this address. In this case, of the three parity bits, the 0th bit and the 2nd bit are not coincident with the corresponding ones of the parity bits read out of the parity memory circuit 13, respectively.

It is further assumed that the input address x = (x, x2) is (1, 1), and a bit error occurs in the data readout of the memory cells 11 as specified by this address. At this time, the 0th to 2nd bits of the parity as newly generated are not coincident with the corresponding ones of the parity read out of the parity memory circuit 13, respectively.

When a bit error occurs, a bit pattern of the three parity bits changes depending on a logic state of a memory cell malfunctioning from the bit error, which is one of the four memory cells in each row of the memory cell array 12. Then, in reading out data, the three parity bits for the readout data are generated. At the same time, three parity bits are read out of the parity memory circuit 13. The generated parity bits are respectively compared with the read out parity bits for the parity check. Through the parity check, the bit error check can be made for the one-bit memory cells 11 of the memory cell array 12.

When a bit error is detected in such a way, if the level of the data readout of the memory cell 11 is inverted, a correct level of the data is obtained, resulting in the bit error correction.

In designing an actual semiconductor memory device based on this embodiment, for generating the parity bits, it is sufficient to read out the cell data from the memory cell array 12 only in the horizontal or row direction. The memory cell array 12 additionally requires the bit line only in the horizontal direction. Therefore, a design of this semiconductor memory device is slightly different from that of the conventional one. It is possible to avoid that the manufacturing process is made more complicated.

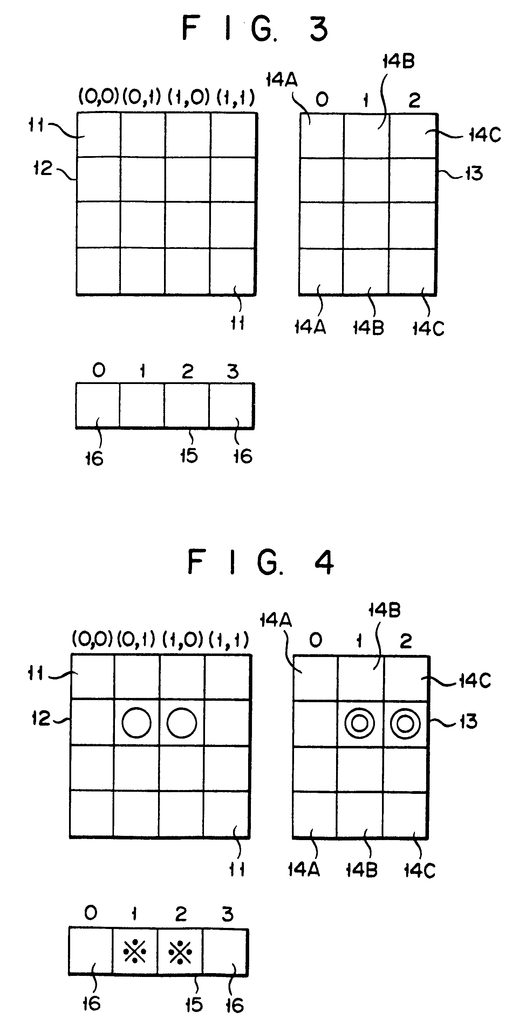

Fig. 3 shows a block diagram of a device for detecting and correcting a 2-bit error into which the semiconductor memory device of the present invention is applied.

In the second embodiment, another parity memory circuit 15 is additionally provided in the Fig. 2 device.

The parity memory circuit 15 is provided with parity storage cells 16 of which the number is equal to the number of columns of the memory cells 11 in the memory cell array 12. The memory cells 11 at the 0th to 2nd bits respectively store parity bits for the data stored in all of the memory cells 11 on the columns of the memory cell array 12.

In the memory device thus arranged, the parity check when the data is read out is similar to that in the Fig. 2 device. The bit error correction up to 2 bits can be made by the parity checks for both the horizontal and the vertical directions. For example, as shown in Fig. 4, it is assumed that a bit error occurs at the two memory cells 11 (circled in the figure) of which the addresses X = (x1, x2) are (0, 1) and (1, 0). In this case, as for the parity for the horizontal direction which is generated at the time of the data readout, the contents in the parity storage cells 14B and 14C (double circled in the figure) at the 1st and the 2nd bits in the parity memory circuit 13 are different from each other. Further, as for the parity for the vertical direction which is generated at the time of data readout, the contents of the two parity storage cells 16 (located at the positions marked by 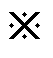 in the figure) in the parity memory circuit 15 are different from each other.

In this memory device, the bit error up to two bits can be detected and corrected by comparing the parity bits stored in the circuits 13 and 15 with those generated at the time of the data readout.

In the Fig. 3 embodiment, like the conventional memory device shown in Fig. 1, in the memory cell array 12, the bit lines for reading out the data must be provided for both the horizontal and vertical directions. It is noted, however, that the bit error of two bits can be corrected with the manufacturing process complicated to such a degree as that in the one-bit error correction. Further, the design of the current semiconductor memory device can be used with minimal modification.

The parity check used in the above-mentioned embodiments may be even or odd parity check.

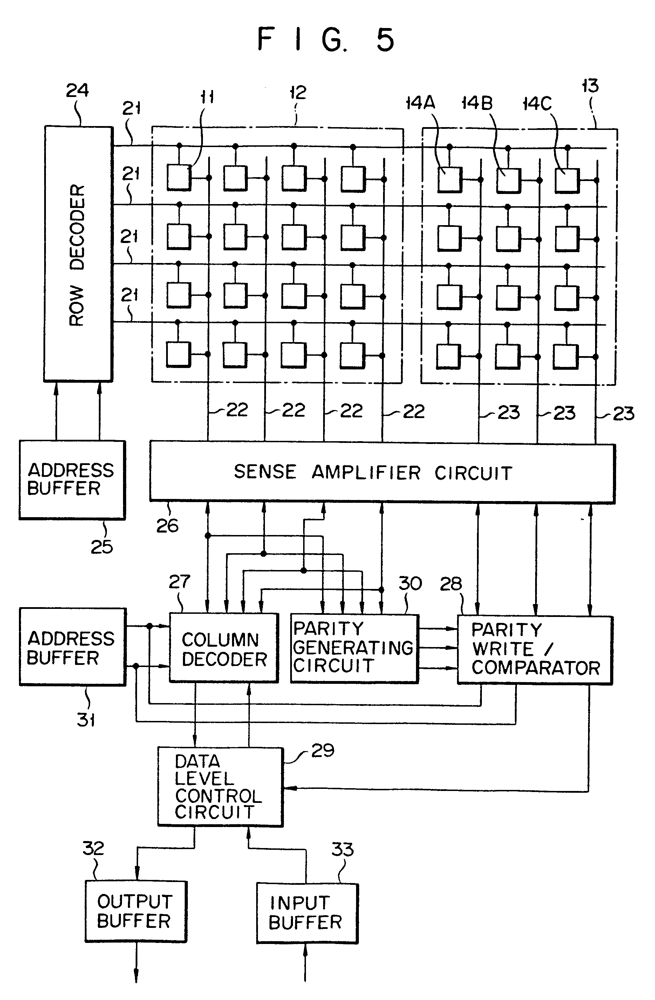

Fig. 5 shows a circuit diagram illustrating in detail the Fig. 2 embodiment.

In the memory cell array 12, four memory cells 11 arrayed in one row and three parity storage cells 14A - 14C similarly arrayed are correspondingly connected together to one of single word lines 21. The four memory cells 11 arrayed in one column in the memory cell array 12 are correspondingly connected together to one of four bit lines 22. Similarly, in the parity memory circuit 13, one of the four parity storage cells 14A to 14C arrayed in a column is correspondingly connected together to one of three bit lines 23.

Any of the four word lines 21 is selected according to the output signal from a row decoder 24. The select operation of the row decoder 24 is under control of an address buffer 25 connected to parts of the addresses X and Y.

The four bit lines 22 connected to the memory cell array 12 and the three bit lines 23 connected to the parity memory circuit 13 are respectively connected to sense amplifiers (not shown) contained in a sense amplifier circuit 26. Incidentally, the number of the sense amplifiers is equal to those bit lines, and is "7" in this embodiment.

The sense amplifier circuit 26 holds the data stored in the four memory cells 11 and the three parity storage cells 14A to 14C, these cells being connected together to a single word line 21 as selected by the row decoder 24, and further holds the data for the data writing into these memory cells. For reading out data from the memory cells 11, a column decoder 27 supplies the write data for the four memory cells 11 to the sense amplifier circuit 26. Further, a parity write/comparator 28 supplies the write parity for the three parity storage cells 14 to the sense amplifier circuit 26. Then, the data or the parity bits are written into the cells 11 or 14.

In reading out data from the memory cells 11, the data are read out from the four memory cells 11. Only one bit of the data held in the sense amplifiers of the sense amplifier circuit 26 is selected by the column decoder 27, and then supplied to a data level control circuit 29. For reading out the parity bits from the parity storage cells 14, the data are read out from the four memory cells 11. The four bits held in the sense amplifiers in the sense amplifier circuit 26 are all supplied to a parity generating circuit 30.

The select operation of the column decoder 27 is controlled by the output signal from the address buffer 31 supplied with parts of the addresses X and Y.

The parity generating circuit 30 generates the three bits using the supplied four bits data, and supplies the parity bits to a parity write/comparator 28. In a write mode of the memory cell array 12, the parity write/comparator 28 supplies the three parity bits as generated by the parity generating circuit 30 to the three sense amplifiers in the sense amplifier circuit 26, thereby to write the parity bits into the parity memory circuit 13. In a read mode of the memory cell array 12, the three parity bits from the parity generating circuit 30 are respectively compared with those held in the three sense amplifiers of the sense amplifier circuit 26. As a result of this parity check, if a bit error is found in the output data from the column decoder 27, the parity write/comparator 28 directs the data level control circuit 29 to invert the level of the data, and generates an address for the memory cell 11 containing the bit error and supplies this address to the column decoder 27. Therefore, the output buffer 32 supplied with the output from the data level control circuit 29 produces the data at a correct level to the exterior. Further, the data which is level-inverted into the correct level by the data level control circuit 29, is supplied to the original sense amplifier 26 corresponding to the address of the memory cell malfunctioning from the bit error. Subsequently, the data of that memory cell is also corrected.

An input buffer 33 is externally supplied with write data for each of the memory cells 11 in the memory cell array 12. The output data from the input buffer 33 is applied to the corresponding sense amplifier in the sense amplifier circuit 26, by way of the data level control circuit 29 and the column decoder 27, and then is stored in one memory cell 11 in the memory cell array 12 in the manner as mentioned above.

In the above-mentioned embodiment, stored into the parity storage cells 14B and 14C at the 1st and the 2nd bits In the parity memory circuit 13 are the parity bits for the cell data in the two of the memory cells 11 of which the address X = (x1, x2) is set at "1" level. Alternatively, the parity bits for the cell data in the two memory cells of which the address X = (x1, x2) is set at logical "0" may be stored into the parity storage cells 14B and 14C.

Further, the memory capacity of the memory cell array 12 may be set at any capacity, not 16 bits, if necessary. In this case, it is necessary to increase or decrease the number of bits in one set of the parity storage cells 14 of the parity memory circuit 13 according to the memory capacity as selected.

## Claims

1. A semiconductor memory device with a bit error detecting function comprising:
- a data memory circuit (12) including a plurality of memory cells (11) which are arrayed in the X and Y directions in a matrix fashion, said plurality of memory cells respectively having addresses expressed by a plurality of bits;
- a parity memory circuit (13) including a plurality of parity storage cells (14A, 14B, 14C) for storing parity bits which are provided for the data stored in said data memory circuit (12);
- a parity generating circuit (30) for generating, in a write mode of said data memory circuit (12), parity bits to be stored in said parity storage cells (14A, 14B, 14C) from the data to be written, and for generating, in a read mode, parity bits from the data readout, said parity bits corresponding to said written data;
- a parity comparing circuit (28) for comparing bit by bit, in a read mode of said data memory circuit (12), the parity bits generated by said parity generating circuit (30) with those stored in said parity storage cells (14A, 14B, 14C) of said parity memory circuit (13); and
- data level control circuit (29) for producing the data readout of said data memory circuit (12) with the noninverted level of said read out data, when the result of the bit by bit comparison by said parity comparing circuit (28) indicates the compared parity bits are coincident with each other, and for producing that data with its level inverted, when the comparison result indicates noncoincidence between them;
said semiconductor memory device being characterized in that
- said parity memory circuit (13) includes a plurality of first parity storage cells (14B, 14C) for storing parity bits which are provided for the data stored in predetermined memory cells of the memory cell array in the X or Y direction, said predetermined memory cells being specified such that predetermined bits of said plurality of addresses' bits of said predetermined memory cells are at the same logical level and a plurality of second parity storage cells (14A) for storing parity bits for all of the data stored in said plurality of memory cells on each linear memory cell array in either the X or Y direction.

2. A semiconductor memory device according to claim 1, characterized by further comprising data write means (27) for deciding that said read out data contains an error only when the comparison result indicates noncoincidence between them, and for writing correct data into the memory cell of said memory circuit (12) from which said error data is read out.

## Patentansprüche

1. Halbleiterspeichergerät mit einer Bit-Fehlererkennungsfunktion, welches umfaßt:
- eine Datenspeicherschaltung (12), welche eine Vielzahl von Speicherzellen (11) beinhaltet, welche in der X- und in der Y-Richtung in einer Matrixart angeordnet sind, wobei die Vielzahl der Speicherzellen jeweils Adressen besitzen, die durch eine Vielzahl von Bits ausgedrückt sind;
- eine Paritätsspeicherschaltung (13), die eine Vielzahl von Paritätsspeicherzellen (14a, 14b, 14c) zum Speichern der Paritätsbits umfaßt, welche für die Daten, die in der Datenspeicherschaltung (12) gespeichert sind, bereitgestellt sind;
- eine Paritätserzeugungsschaltung (30) zum Erzeugen von Paritätsbits von den zu schreibenden Daten in einem Schreibmode der Datenspeicherschaltung (12), um in den Paritätsspeicherzellen (14a, 14b, 14c) gespeichert zu werden, und zum Erzeugen von Paritätsbits aus den ausgelesenen Daten in einem Lesemode, wobei die Paritätsbits den geschriebenen Daten entsprechen;
- eine Paritätsvergleichsschaltung (28) zum bitweisen Vergleich, in einem Lesemode der Datenspeicherschaltung (12), der Paritätsbits, die durch die Paritätserzeugungsschaltung (30) erzeugt werden, mit jenen, die in den Paritätsspeicherzellen (14a, 14b, 14c) der Paritätsspeicherschaltung (13) gespeichert sind; und
- eine Datenpegelsteuerungsschaltung (29) zum Erzeugen der Auslesedaten der Datenspeicherschaltung (12) mit dem nichtinvertierten Pegel der Auslesedaten, wenn das Ergebnis des bitweisen Vergleichs durch die Paritätsvergleichsschaltung (28) anzeigt, daß die verglichenen Paritätsbits jeweils miteinander übereinstimmen, und zum Erzeugen der Daten mit ihren invertierten Pegeln, wenn das Vergleichsergebnis eine Nichtübereinstimmung zwischen diesen anzeigt;
wobei das Halbleiterspeichergerät dadurch gekennzeichnet ist, daß
- die Paritätsspeicherschaltung (13) eine Vielzahl von ersten Paritätsspeicherzellen (14b, 14c) zum Speichern der Paritätsbits, welche für die Daten, die in vorbestimmten Speicherzellen des Speicherzellenarrays in der X- oder Y-Richtung gespeichert sind, wobei die vorbestimmten Speicherzellen so spezifiziert werden, daß vorbestimmte Bits der Vielzahl von Adressenbits der vorbestimmten Speicherzellen auf demselben logischen Pegel sind, und eine Vielzahl von zweiten Paritätsspeicherzellen (14a) zum Speichern der Paritätsbits für alle die Daten, die in der Vielzahl der Speicherzellen in jedem linearen Speicherzellenarray entweder in der X- oder in der Y-Richtung gespeichert sind, umfaßt.

2. Halbleiterspeichergerät nach Anspruch 1, gekennzeichnet durch ferner eine Datenschreibeinrichtung (27), um zu entscheiden, daß die Auslesedaten einen Fehler nur enthalten, wenn das Vergleichsergebnis Nichtübereinstimmung zwischen ihnen anzeigt, und zum Schreiben korrekter Daten in die Speicherzelle der Speicherschaltung (12), von welcher die Fehlerdaten ausgelesen sind.

## Revendications

1. Dispositif de mémoire à semi-conducteur muni d'une fonction de détection d'erreur binaire comprenant :
- un circuit de mémoire de données (12) comprenant une pluralité de cellules de mémoire (11) qui sont rangées dans les directions X et Y d'une matrice, ladite pluralité de cellules de mémoire possédant respectivement des adresses exprimées par une pluralité de bits;
- un circuit de mémoire de parité (13) comprenant une pluralité de cellules de stockage de parité (14A, 14B, 14C) pour le stockage de bits de parité qui sont prévus pour les données stockées dans ledit circuit de mémoire de données (12);
- un circuit de génération de parité (30) pour la génération, dans un mode d'écriture dudit circuit de mémoire de données (12), de bits de parité à stocker dans lesdites cellules de stockage de parité (14A, 14B, 14C) à partir des données à écrire et pour la génération, dans un mode de lecture, de bits de parité à partir des données extraites, lesdits bits de parité correspondants auxdites données écrites;
- un circuit de comparaison de parité (28) pour la comparaison bit par bit, dans un mode de lecture dudit circuit de mémoire de données (12), des bits de parité générés par ledit circuit de génération de parité (30) avec ceux stockés dans lesdites cellules de stockage de parité (14A, 14B, 14C) dudit circuit de mémoire de parité (13); et
- un circuit de commande du niveau de données (29) pour la production des données extraites dudit circuit de mémoire de données (12) avec le niveau non inversé desdites données extraites, lorsque le résultat de la comparaison bit par bit effectuée par ledit circuit de comparaison de parité (28) indique que les bits de parité comparés coïncident l'un avec l'autre, et pour la production de ces données avec un niveau inversé lorsque le résultat de la comparaison indique qu'ils ne coïncident pas;
ledit dispositif de mémoire à semi-conducteur étant caractérisé en ce que ledit circuit de mémoire de parité (13) comprend une pluralité de premières cellules de stockage de parité (14B, 14C) pour le stockage des bits de parité qui sont prévus pour les données stockées dans des cellules de mémoire prédéterminées de la matrice de cellules de mémoire dans la direction X ou Y, lesdites cellules de mémoire prédéterminées étant spécifiées de telle façon que des bits prédéterminés de ladite pluralité de bits d'adressage desdites cellules de mémoire prédéterminées sont au même niveau logique, et une pluralité de secondes cellules de stockage de parité (14A) pour le stockage de bits de parité pour toutes les données stockées dans ladite pluralité de cellules de mémoire pour chaque matrice linéaire de cellules de mémoire soit dans la direction X, soit dans la direction Y.

2. Dispositif de mémoire à semi-conducteur selon la revendication 1, caractérisé, de plus, par le fait qu'il comprend un moyen d'écriture de données (27) pour décider que ladite donnée extraite contient une erreur seulement lorsque le résultat de la comparaison indique qu'ils ne coïncident pas et pour écrire la donnée correcte dans la cellule de mémoire dudit circuit de mémoire 12 à partir de laquelle est extraite ladite donnée erronée.
